# EUROPEAN PATENT SPECIFICATION

(11) **EP 3 855 565 B1**
(45) Date of publication and mention of the grant of the patent: **07.06.2023**
(21) Application number: 20153927.7
(22) Date of filing: 27.01.2020
(51) Int. Cl.: H01Q 1/32, G01S 13/931, H01Q 1/42

(54) **EXTERNAL CLADDING COMPONENT OF A VEHICLE, VEHICLE COMPRISING SUCH AN EXTERNAL CLADDING COMPONENT AND METHOD FOR MANUFACTURING SUCH AN EXTERNAL CLADDING COMPONENT**
AUSSENVERKLEIDUNGSTEIL EINES FAHRZEUGS, FAHRZEUG MIT EINEM SOLCHEN AUSSENVERKLEIDUNGSTEIL UND VERFAHREN ZUR HERSTELLUNG EINES SOLCHEN AUSSENVERKLEIDUNGSTEILS
COMPOSANT DE REVÊTEMENT EXTÉRIEUR D'UN VÉHICULE, VÉHICULE COMPRENANT UN TEL COMPOSANT DE REVÊTEMENT EXTÉRIEUR ET PROCÉDÉ DE FABRICATION D'UN TEL COMPOSANT DE REVÊTEMENT EXTÉRIEUR

(43) Date of publication of application: 28.07.2021
(73) Proprietor: Motherson Innovations Company Limited, London EC2N 2AX (GB)
(72) Inventor: SEPP, Benjamin, 77723 Gengenbach (DE)
(74) Representative: Westphal, Mussgnug & Partner Patentanwälte mbB

(56) References cited:
- CN-A- 108 016 388
- DE-A1-102007 062 945
- DE-A1-102014 213 502
- JP-A- H08 148 922
- US-A1- 2015 109 162

## Description

The present disclosure relates to an external cladding component of a vehicle. Moreover the present disclosure relates to a vehicle comprising such an external cladding component and to a method for manufacturing such an external cladding component.

In order to enhance the operational safety, modern vehicles are equipped with a number of assistance systems assisting the vehicle driver. Many assistance systems are based on the monitoring of the surroundings of the vehicle and interact with respective sensors. Based on the situation identified in the surroundings of the vehicle the assistance systems may take action. Such an action may be to generate a signal, e.g., in optical or acoustic form, to draw the driver's attention to a certain situation. Such a situation could be that objects are identified in the surroundings that may collide with the vehicle if no counteractions are taken. Another action may be that the assistance systems initiate a braking manoeuver and/or to intervene in the steering to conduct an evasive manoeuver. The monitoring of the surroundings of a vehicle is a key issue in the autonomous driving.

To monitor the surroundings the sensors may comprise a source for electromagnetic waves that are emitted to the surroundings. In case an object is present in the surroundings the electromagnetic waves are reflected and detected by a respective receiver. The situation in the surroundings of the vehicle can thus be characterized. The degree a certain object reflects the electromagnetic waves amongst others depends on the material the object is made of. Other factors are the size of the object and the effective reflection surface. Consequently vehicles are equipped with sensors, in particular with radar sensors, using electromagnetic waves of different wavelength and frequency ranges.

Due to design reasons the sensors are located behind the external cladding component such that they are invisible or almost invisible from the exterior. Therefore the electromagnetic waves emitted by the respective sources have to penetrate the external cladding component of the vehicle. In many cases the external cladding components are made of plastics, in particular of thermoplastics. Depending on the thickness, in particular the wall thickness of the external cladding component the electromagnetic waves are more or less dampened. The more the waves are dampened the smaller is the range by which the sensors can monitor the surroundings of the vehicle.

Usually the degree of dampening does not linearly increase with increasing thickness of the penetrated material but rather follows a sine curve having alternating damping maxima and minima. Small differences of the wall thickness may be decisive whether a maximum or a minimum is present. In case of frequencies in the range of 50 and 200 GHz which is used by radar sensors differences of 0,1 to 1 mm may have a significant impact on the degree of dampening.

As mentioned above, the majority of external cladding components is made of plastics, in particular of thermoplastics. External cladding components made of thermoplastics are usually injection molded. As a consequence the wall thickness varies within certain ranges. To ensure proper functioning the wall thickness of each external cladding component needs to be measured and corrected at least in the penetration section where the electromagnetic waves penetrate the external cladding component. The wall thickness may be corrected by increasing or decreasing. When corrected by increasing further material is applied that enhances the costs and weight. The respective tools for applying further material is complicated. When corrected by decreasing the quality of the surface of the external cladding component may be negatively affected in particular by sink marks. This situation is aggravated by the fact that the wall thickness typically used for external cladding components are in a range where the dampening degree is in the area of its maximum for electromagnetic waves that are employed in radar sensors. The wall thickness of the exterior cladding components is optimized with respect to weight and stiffness so it does not make sense to change the wall thickness of the entire external cladding component.

EP 2 151 889 A1 suggests to arrange a conductor between two plastic layers of a radome that is then inserted into the external cladding component. However, the respective effort is considered to be high and expensive.

Reference is further made to US 2015/109 162 A1 and DE 10 2007 062 945 A1.

It is one task of one embodiment of the present disclosure to present an external cladding component by which the dampening degree can be easily and cost-efficiently be adjusted to the desired value. Furthermore, an embodiment of the present disclosure has the object to provide a vehicle that can be equipped with such an external cladding component. Beyond that it is one object of one embodiment of the present disclosure to suggest a method by which the dampening degree can be easily and cost-efficiently be adjusted to the desired value.

The task is solved by the features specified in claims 1, 7 and 9. Advantageous embodiments are the subject of the dependent claims.

According to an embodiment an external cladding component of a vehicle comprises a penetration section that is permeable to electromagnetic waves of a frequency in the range between 50 and 200 GHz. The penetration section comprises
- a plastic body having a first surface and a second surface,
- a basic lacquer applied to the first surface,
- a top lacquer applied on the basic lacquer, and
- a plastic foil that is applied to the top lacquer.

Alternatively, the penetration section comprises
- a plastic body having a first surface and a second surface,
- a basic lacquer,
- a top lacquer and
- a plastic foil, either
   ∘ applied on the first surface (14) between the plastic body (12) and the basic lacquer (18), wherein the top lacquer is applied to the basic lacquer, or
   ∘ applied between the basic lacquer and the top lacquer, wherein the basic lacquer is applied to the first surface.

The thickness of the external cladding component can be increased at least within the penetration section by means of a plastic foil. As initially illustrated the thickness of the external cladding component influences the dampening degree, in particular of a frequency in the range of 50 to 200 GHz. The application of a plastic foil on the external cladding component can be conducted within a short time at acceptable effort. The arrangement of the plastic foil is freely selectable within the penetration section. The material costs and the additional weight are low. In particular design aspects can be considered such that the additional plastic foil is not or hardly visible from the exterior. Moreover, the constraints on the manufacturing process are kept low.

In another embodiment the plastic foil is applied on the second surface by means of an adhesive layer between the second surface and the plastic foil. The use of an adhesive layer facilitates the application of the plastic foil and ensures that the foil cannot detach from the external cladding component during the life time of the vehicle. The second surface is the surface facing to the interior of the vehicle. When provided on the second surface the plastic foil is invisible from the exterior so the design of the vehicle is not influenced. Moreover, the plastic foil is protected by the external cladding component from external influences such as physical and chemical stress. Physical stress may be the impact of particles and UV-radiation and the influence temperature changes. Chemical stress may be the impact of substances that may interact with the plastic foil and may catalyze decomposition reactions of the plastic.

A further embodiment is characterized in that the top lacquer is embodied as a clear lacquer. Clear lacquers do not influence the color of the external cladding component and mainly serve as a protection layer protecting the lower layers applied to the external cladding component. Depending on the arrangement of the plastic foil the clear lacquer may also protect the plastic foil from external stress.

According to another embodiment the penetration section further comprises a primer applied on the first surface. The primer layer enhances the adhesion of the lacquer to the plastic body. However, depending on the lacquer used for the plastic body the adhesion may be strong enough that no primer is needed. However, the adhesion obtained by specific lacquers is usually not as high as the adhesion provided by a primer. The use of a primer is therefore beneficial in particular to ensure long-term quality of the appearance of the lacquer.

In another embodiment at least one further lacquer is arranged between the basic lacquer and the top lacquer. The use of at least one further lacquer enables the generation of certain optical effects such as metallic effect or pearl effect.

A further embodiment the external cladding component has the same construction as the penetration section, except for the plastic foil only being arranged in the penetration section. In order to reach the effects described above one may provide the penetration section as a separate part and insert the penetration section into the external cladding component. However, the effort of providing a penetration section according to the present disclosure may be significantly lowered when the plastic foil is applied to the external cladding component in the penetration section only. No further steps are required.

Another aspect of the disclosure is directed to a vehicle, comprising
- a source for electromagnetic waves of a frequency in the range between 50 and 200 GHz, and
- an external cladding component according to one of the preceding embodiments,
- the source being arranged such that the electromagnetic waves generated by the source impinge the second surface of the penetration section.

The technical effects and advantages as discussed with regard to the present external cladding component equally apply to the vehicle. Briefly, the thickness of the external cladding component can be increased at least within the penetration section by means of a plastic foil which is easy and time-efficient. Consequently the dampening degree for electromagnetic waves in the range between 50 and 200 GHz can be adjusted towards its minimum.

According to another embodiment the source emits the electromagnetic waves along a main direction and the Normal vector of the second surface forms an angle relative to the main direction. Exterior cladding components usually have an arched shape such that the second surface is inclined relative to the main direction. The angle usually encountered is between 0° and 20°, in particular between 1° and 7° but may deviate therefrom. It is not necessary that the Normal vector of the second surface is aligned with the main direction along which the electromagnetic waves are emitted from the source. The design freedom is not significantly reduced. The angle is taken into account in the calculation of the appropriate foil thickness.

Another aspect of the disclosure is directed to a method for manufacturing an external cladding component according to one of the preceding embodiments, comprising the steps of
- providing the plastic body,
- applying the basic lacquer on the first surface of the plastic body,
- applying at least the top lacquer on the basic lacquer,
   ∘ measuring a first thickness of the external cladding component inside the penetration section, or
   ∘ estimating the first thickness of the cladding component inside the penetration section based on CAD-data,
- determining a second thickness of the plastic foil considering the dampening for electromagnetic waves in the range between 50 and 200 GHz, and
- applying the plastic foil having the second thickness
   ∘ on the first surface between the plastic body and the basic lacquer,
   ∘ between the basic lacquer and the top lacquer, or
   ∘ on the top lacquer
- in the penetration section, if necessary.

It is noted that the method does not necessarily have to be conducted in the given sequence.

The plastic body may be provided by injection molding. The first thickness, namely the thickness of the plastic body is measured including the lacquers and primers are applied hereto. It is also possible to measure the thickness of the plastic body before the lacquers and primers are applied to the plastic body. In this case the thickness of the lacquers and primers need to be estimated and added to the measured thickness to arrive at the first thickness.

Alternatively the first thickness is estimated based on CAD-data (computer aided design). In this alternative no measurement step is needed thereby saving costs and time. This embodiment may be applied when the production process is well understood and the deviations from the CAD-data can well be estimated. Also in this case the thickness of the lacquers and primers need to be estimated and added to the thickness of the plastic body taken from CAD-data to arrive at the first thickness.

After that the second thickness, namely the thickness of the plastic foil, is determined with the aim to reduce the dampening degree for electromagnetic waves in the range between 50 and 200 GHz. To this end a respective algorithm may be used. This algorithm considers a number of parameters of the external cladding component and the lacquers, primers, adhesives and the plastic foil applied hereto. In particular the permittivity, the employed frequency of the electromagnetic waves and the angle the Normal vector of the second surface is enclosing with the main direction are considered. Other electromagnetic material parameters such as the thickness of each lacquer layer may be considered.

In case the calculated second thickness is zero no plastic foil is added. In case the second thickness is bigger than zero the plastic foil of the respective thickness is applied to the plastic body in the penetration section. The latter case is frequently encountered.

In another embodiment a plurality of external cladding components is sequentially produced and the step of measuring the first thickness is
- either carried out on each external cladding component, or
- on a representative number of external cladding components, or
- on a sample part before the start of the production.

In case the measurement is conducted on each external cladding component a very similar dampening degree of a plurality of external cladding components can be obtained. Outliers may be identified and removed. This kind of measurement is also referred to as 100%-measurement. However, the respective effort is fairly high. To reduce the effort the measurement may be conducted on a representative number of external cladding components. The effort is further reduced in case the measurement is only conducted on a sample part before the start of the production. Which method is employed may depend on whether or not the cladding component is produced for the first time or for a long time. If produced for the first time it may be beneficial to conduct a 100% measurement. The longer the cladding component is produced one of the two other methods may be employed.

The present disclosure is described in detail with reference to the drawings attached wherein
- Figure 1: shows a first embodiment of a cladding component according to the present disclosure,
- Figure 2: shows a second embodiment of a cladding component according to the present disclosure,
- Figure 3: shows a third embodiment of a cladding component according to the present disclosure,
- Figure 4: shows a fourth embodiment of a cladding component according to the present disclosure, all by means of a principle sectional view, and
- Figure 5: shows a vehicle comprising in total three cladding components according to one of the embodiments shown in Figures 1 to 4, the vehicle being shown by means of a principle top view.

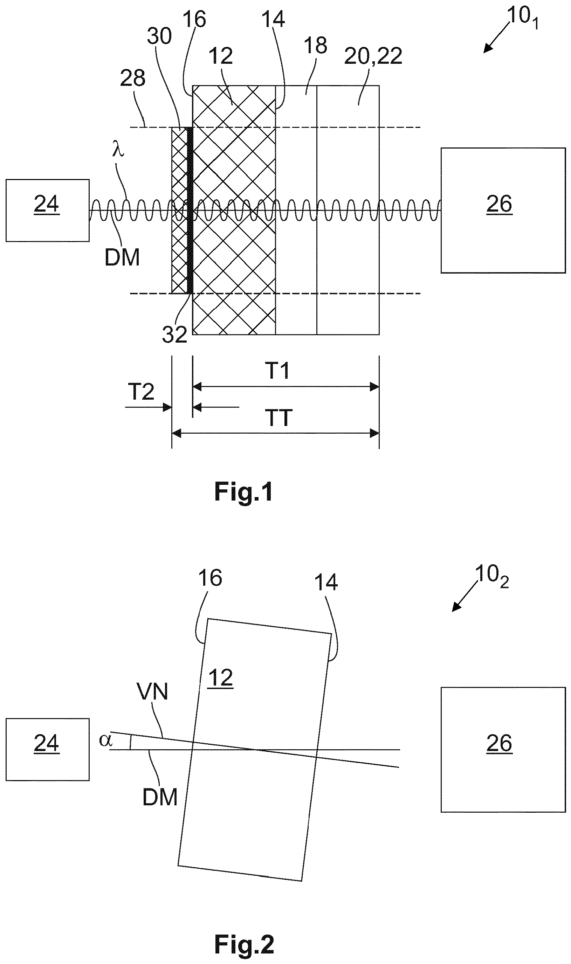

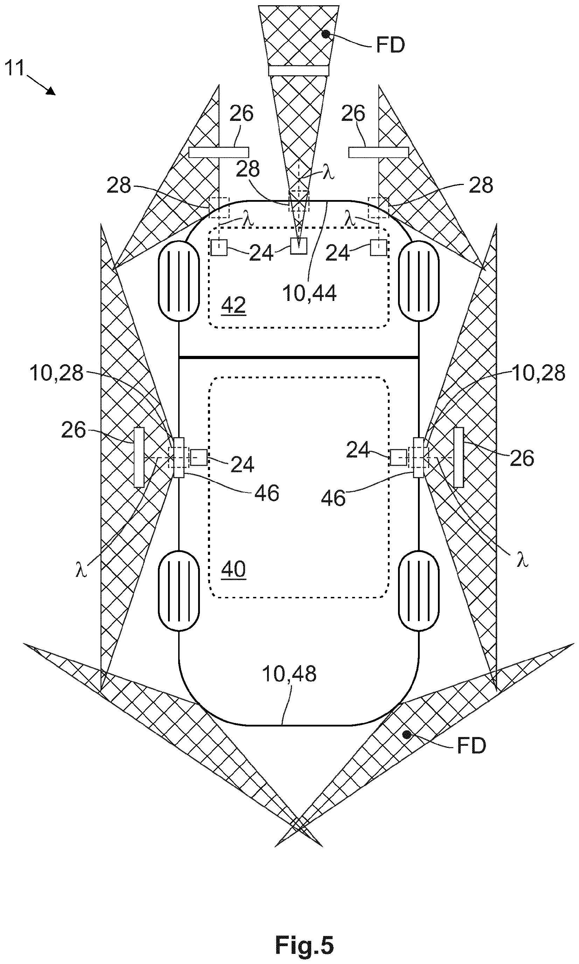

In Figure 1 a first embodiment of an external cladding component 10₁ of a vehicle 11 (see Figure 5) is illustrated by means of a principle sketch. The external cladding component 10₁ comprises a plastic body 12 having a first surface 14 and a second surface 16. A basic lacquer 18 is applied to the first surface 14. Moreover, a top lacquer 20 is applied to the basic lacquer 18. The top lacquer 20 is embodied as a clear lacquer 22. The basic lacquer 18 and the top lacquer 20 are arranged in layers on top of each other.

A source 24 for electromagnetic waves λ of a frequency in the range from 50 to 200 GHz is fastened to the vehicle 11. The electromagnetic waves λ are emitted by the source 24 along a main direction DM such that they impinge the second surface 16 of the cladding component 10₁. After that the electromagnetic waves λ penetrate the external cladding component 10₁ and enter the surroundings of the cladding component 10₁. As the external cladding component 10₁ delimits the vehicle 11 the surroundings of the cladding are concomitantly the surroundings of the vehicle 11.

The electromagnetic waves λ may hit an object 26 located in the surroundings of the vehicle 11 and may be reflected therefrom. The reflected part of the electromagnetic waves λ may be detected by a receiver (not shown) which is typically arranged in the same housing as the source 24. The object 26 is thereby identified, in particular in terms of object category and object movement.

The electromagnetic waves λ penetrate the external cladding component 10₁ within a penetration section 28. Inside the penetration section 28 a plastic foil 30 is attached to the second surface 16 by means of an adhesive layer 32. The external cladding component 10₁ has a first thickness T1 outside the penetration section 28. The plastic foil 30 has a second thickness T2. In case an adhesive layer 32 is used the second thickness T2 includes the thickness of the adhesive layer 32. As a result the external cladding component 10₁ has a total thickness TT inside the penetration section 28 that is bigger than the first thickness T1. The total thickness TT is at least approximately the sum of the first thickness T1 and the second thickness T2.

The electromagnetic waves λ are dampened when they penetrate the cladding component 10₁. The degree of dampening does not linearly increase with increasing first thickness T1 but rather follows a sine curve having alternating damping maxima and minima. In production the unpainted plastic body 12 is produced, in particular by injection molding. After that the basic lacquer 18 and the top lacquer 20 are subsequently applied, in this case on the first surface 14. Then the first thickness T1 is measured including the plastic body 12 and the lacquers applied hereto.

Alternatively the first thickness T1 may be measured before the basic lacquer 18 and the top lacquer 20 are applied to the plastic body 12. This alternative may be employed in case the application process of the basic lacquer 18 and the top lacquer 20 are well understood and controlled and thus the thickness of the basic lacquer 18 and the top lacquer 20 can be estimated with sufficient precision.

Alternatively no measurement is conducted at all but the thickness of the plastic body is taken from CAD-data and the thickness of the basic lacquer 18 and the top lacquer 20 is estimated.

By using an algorithm the degree of the dampening is calculated based on the measured or estimated first thickness T1. If the degree of dampening is too high, the second thickness T2, i.e., the thickness of the plastic foil 30 and the adhesive layer 32 is calculated. In production plastic foils 30 of gradually increasing thickness may be stored. The plastic foil 30 having a thickness best matching the calculated thickness is applied to the second surface 16 by the adhesive layer 32 such that the external cladding component 10₁ has the total thickness TT inside the penetration section 28. Instead of applying the plastic foil 30 having the best matching thickness the thickness of the adhesive layer 32 can be adjusted according to the results of the calculation of the second thickness T2. As a consequence the degree of dampening inside the penetration section 28 can be reduced below a predefined value. The remaining external cladding component 10₁ remains unchanged.

In Figure 2 a second embodiment of the external cladding component 10₂ is shown in a simplified form compared to the first embodiment of the external cladding component 10₁ shown in Fig-ure 1. However, the structure of the external cladding component 10₂ of the second embodiment is the same as of the external cladding component 10₁ according to the first embodiment. The main difference is the following: The second surface 16 forms a Normal vector VN that encloses an angle α with the main direction DM the electromagnetic waves λ are emitted by the source 24. In the first embodiment of the external cladding component 10₁ the second surface 16 is aligned such that the angle α is zero. In contrast to that the second surface 16 of the second embodiment of the external cladding component 10₂ is aligned such that the angle α is bigger than zero, in this case 7° but may deviate from this value depending on the shape of the external cladding component 10₁.

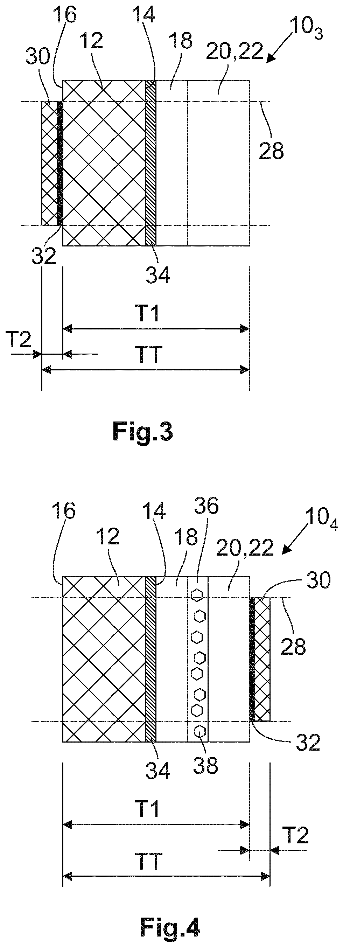

In Figure 3 a third embodiment of the external cladding component 10₃ is shown. The source 24 and the object 26 are not shown but are arranged in the same way as shown in Figure 1. The structure of the external cladding component 10₃ of the third embodiment is the same as of the external cladding component 10₁ according to the first embodiment with the following exception: A primer 34 is arranged on the first surface 14 between the plastic body 12 and the basic lacquer 18. The primer 34 adds to the first thickness T1 and is thus also considered in the calculation of the second thickness T2 of the plastic foil 30.

In Figure 4 a fourth embodiment of the external cladding component 10₄ is shown. The source 24 and the object 26 are not shown but are arranged in the same way as in Figure 1. The structure of the external cladding component 10₄ of the fourth embodiment differs in the following from the first embodiment:
Like in the third embodiment the primer 34 is arranged on the first surface 14 between the plastic body 12 and the basic lacquer 18. A further lacquer 36 is arranged between the basic lacquer 18 and the top lacquer 20. The further lacquer 36 layer comprises a number of particles 38, e.g. particles of metal. Thereby a metallic or pearl effect is created. The primer 34 and the further lacquer 36 add to the first thickness T1 and are thus also considered in the calculation of the second thickness T2 of the plastic foil 30.

In the fourth embodiment the plastic foil 30 is arranged on the top layer, again by means of the adhesive layer 32.

Figure 5 shows a principle top view of a vehicle 11. For the sake of orientation a passenger compartment 40 and an engine compartment 42 are shown. The vehicle 11 comprises in total three cladding components 10 according to one example of the present disclosure. The first external cladding component 10 is embodied as a front bumper 44 and arranged in the front of the vehicle 11. The bumper 44 comprises three penetration sections 28 through which electromagnetic waves λ may penetrate and enter into the surroundings of the vehicle 11 where they may hit an object 26. The electromagnetic waves λ are generated by the sources 24 arranged inside the engine compartment 42 of the vehicle 11.

The second external cladding component 10 and the third external cladding component 10 according to the present disclosure are part of the B-pillar 46. A fourth external cladding component 10 is embodied as a rear bumper 48 and arranged in the back of the vehicle 11. For the sake of clarity the sources 24 and the penetration section 28 is not shown. However, the basic design of the rear bumper 48 is the same as of the front bumper 44.

The field of detection FD provided by the sources 24 is also shown in Figure 5 by the cross hatched areas. It is evident that almost the entire surroundings of the vehicle 11 can be monitored.

Further cladding components 10₁ according to the present disclosure may be arranged in the A-pillars, C-pillars, in rocker panels, in roof spoilers or the like (not shown).

## Claims

1. External cladding component (10) of a vehicle (11), comprising a penetration section (28) that is permeable to electromagnetic waves (λ) in the range between 50 and 200 GHz, the penetration section (28) either comprising
- a plastic body (12) having a first surface (14) and a second surface (16),
- a basic lacquer (18) applied to the first surface (14),
- a top lacquer (20) applied on the basic lacquer (18), and
- a plastic foil (30) applied on the top lacquer (20), or comprising
- a plastic body (12) having a first surface (14) and a second surface (16),
- a basic lacquer (10),
- a top lacquer (20) and
- a plastic foil, either
∘ applied on the first surface (14) between the plastic body (12) and the basic lacquer (18), wherein the top lacquer (20) is applied to the basic lacquer(10), or
∘ applied between the basic lacquer (18) and the top lacquer (20), wherein the basic lacquer (18) is applied to the first surface (14).

2. External cladding component (10) according to claim 1, **characterized in that** the plastic foil (30) is applied on the second surface (16) by means of an adhesive layer (32) between the second surface (16) and the plastic foil (30).

3. External cladding component (10) according to one of the claims 1 or 2,
**characterized in that** the top lacquer (20) is embodied as a clear lacquer (22).

4. External cladding component (10) according to any of the preceding claims,
**characterized in that** the penetration section (28) further comprises a primer (34) applied on the first surface (14).

5. External cladding component (10) according to any of the preceding claims,
**characterized in that** at least one further lacquer (36) is arranged between the basic lacquer (18) and the top lacquer (20) .

6. External cladding component (10) according to any of the preceding claims,
**characterized in that** the cladding component (10) has the same construction as the penetration section (28), except for
- the plastic foil (30) or
- the plastic foil (30) and the adhesive layer (32) only being arranged in the penetration section (28).

7. Vehicle (11), comprising
- a source (24) for electromagnetic waves (λ) in the range between 50 and 200 GHz,
- an external cladding component (10) according to one of the preceding claims,
- the source (24) being arranged such that the electromagnetic waves (λ) generated by the source (24) impinge the second surface (16) of the penetration section (28).

8. Vehicle (11) according to claim 7,
**characterized in that**
- the source (24) emits the electromagnetic waves (λ) along a main direction (DM) and
- the Normal vector (VN) of the second surface (16) forms an angle (α) relative to the main direction (DM).

9. Method for manufacturing an external cladding component (10) according to any of the claims 1 to 6, comprising the steps of
- providing the plastic body (12),
- applying the basic lacquer (18)
∘ on the first surface (14) of the plastic body (12),
- applying at least the top lacquer (20) on the basic lacquer (18),
∘ measuring a first thickness (T1) of the cladding component (10) inside the penetration section (28), or
∘ estimating the first thickness (T1) of the cladding component (10) inside the penetration section (28) based on CAD-data,
- determining a second thickness (T2) of the plastic foil (30) considering the dampening for electromagnetic waves (λ) in the range between 50 and 200 GHz, and
- in case the calculated second thickness (T2) is bigger than zero, applying the plastic foil (30) having the second thickness (T2)
∘ on the first surface (14) between the plastic body (12) and the basic lacquer (18), or
∘ between the basic lacquer (18) and the top lacquer (20), or
∘ on the top lacquer (20),
in the penetration section (28).

10. Method according to claim 9, wherein a plurality of external cladding components (10) is sequentially produced and the step of measuring the first thickness (T1) is
- either carried out on each cladding component (10), or
- on a representative number of cladding components (10), or
- on a sample part before the start of the production.

## Patentansprüche

1. Außenverkleidungskomponente (10) eines Fahrzeugs (11), die einen Durchdringungsabschnitt (28) aufweist, der für elektromagnetische Wellen (λ) im Bereich zwischen 50 und 200 GHz durchlässig ist, wobei der Durchdringungsabschnitt (28) entweder
- einen Kunststoffkörper (12) mit einer ersten Oberfläche (14) und einer zweiten Oberfläche (16),
- einen auf die erste Oberfläche (14) aufgebrachten Basislack (18),
- einen auf den Basislack (18) aufgebrachten Decklack (20), und
- eine auf den Decklack (20) aufgebrachte Kunststofffolie (30)
aufweist, oder
- einen Kunststoffkörper (12) mit einer ersten Oberfläche (14) und einer zweiten Oberfläche (16),
- einen Basislack (10),
- einen Decklack (20) und
- eine Kunststofffolie, die entweder
∘ auf die erste Oberfläche (14) zwischen dem Kunststoffkörper (12) und dem Basislack (18) aufgebracht ist, wobei der Decklack (20) auf den Basislack (10) aufgebracht ist, oder
∘ zwischen dem Basislack (18) und dem Decklack (20) aufgebracht ist, wobei der Basislack (18) auf die erste Oberfläche (14) aufgebracht ist.

2. Außenverkleidungskomponente (10) nach Anspruch 1,
**dadurch gekennzeichnet, dass** die Kunststofffolie (30) mittels einer Klebeschicht (32) zwischen der zweiten Oberfläche (16) und der Kunststofffolie (30) auf die zweite Oberfläche (16) aufgebracht ist.

3. Außenverkleidungskomponente (10) nach einem der Ansprüche 1 oder 2,
**dadurch gekennzeichnet, dass** der Decklack (20) als Klarlack (22) ausgeführt ist.

4. Außenverkleidungskomponente (10) nach einem der vorhergehenden Ansprüche,
**dadurch gekennzeichnet, dass** der Durchdringungsabschnitt (28) weiterhin eine Grundierung (34) aufweist, die auf die erste Oberfläche (14) aufgebracht ist.

5. Außenverkleidungskomponente (10) nach einem der vorangehenden Ansprüche,
**dadurch gekennzeichnet, dass** zwischen dem Basislack (18) und dem Decklack (20) zumindest ein weiterer Lack (36) angeordnet ist.

6. Außenverkleidungskomponente (10) nach einem der vorangehenden Ansprüche,
**dadurch gekennzeichnet, dass** die Verkleidungskomponente (10) denselben Aufbau wie der Durchdringungsabschnitt (28) aufweist, mit der Ausnahme, dass
- die Kunststofffolie (30) oder
- die Kunststofffolie (30) und die Klebeschicht (32) nur in dem Durchdringungsabschnitt (28) angeordnet ist/sind.

7. Fahrzeug (11), das aufweist
- eine Quelle (24) für elektromagnetische Wellen (λ) im Bereich zwischen 50 und 200 GHz,
- eine Außenverkleidungskomponente (10) nach einem der vorhergehenden Ansprüche,
- wobei die Quelle (24) so angeordnet ist, dass die durch die Quelle (24) erzeugten elektromagnetischen Wellen (λ) auf die zweite Oberfläche (16) des Durchdringungsabschnitts (28) auftreffen.

8. Fahrzeug (11) nach Anspruch 7,
**dadurch gekennzeichnet, dass**
- die Quelle (24) die elektromagnetischen Wellen (λ) entlang einer Hauptrichtung (DM) emittiert und
- der Normalenvektor (VN) der zweiten Oberfläche (16) einen Winkel (α) relativ zu der Hauptrichtung (DM) bildet.

9. Verfahren zum Herstellen einer Außenverkleidungskomponente (10) nach einem der Ansprüche 1 bis 6, das die Schritte aufweist
- Bereitstellen des Kunststoffkörpers (12),
- Aufbringen des Basislacks (18)
∘ auf die erste Oberfläche (14) des Kunststoffkörpers (12),
- Aufbringen zumindest des Decklacks (20) auf den Basislack (18),
∘ Messen einer ersten Dicke (Tl) der Verkleidungskomponente (10) innerhalb des Durchdringungsabschnitts (28), oder
∘ Schätzen der ersten Dicke (Tl) der Verkleidungskomponente (10) innerhalb des Durchdringungsabschnitts (28) basierend auf CAD-Daten,
- Bestimmen einer zweiten Dicke (T2) der Kunststofffolie (30) unter Berücksichtigung der Dämpfung für elektromagnetische Wellen (λ) im Bereich zwischen 50 und 200 GHz, und
- für den Fall, dass die berechnete zweite Dicke (T2) größer als Null ist, Aufbringen der Kunststofffolie (30) mit der zweiten Dicke (T2)
∘ auf die erste Oberfläche (14) zwischen dem Kunststoffkörper (12) und dem Basislack (18), oder
∘ zwischen dem Basislack (18) und dem Decklack (20), oder
∘ auf dem Decklack (20),
in dem Durchdringungsabschnitt (28).

10. Verfahren nach Anspruch 9, wobei mehrere Außenverkleidungskomponenten (10) nacheinander hergestellt werden und der Schritt des Messens der ersten Dicke (Tl)
- entweder an jeder Verkleidungskomponente (10) durchgeführt wird, oder
- an einer repräsentativen Anzahl von Verkleidungskomponenten (10), oder
- an einem Probenteil vor dem Beginn der Produktion.

## Revendications

1. Composant de revêtement externe (10) d'un véhicule (11) comprenant une section de pénétration (28) perméable aux ondes électromagnétiques (λ) dans la plage comprise entre 50 et 200 GHz,
la section de pénétration (28) comprenant :
un corps en plastique (12) ayant une première surface (14) et une seconde surface (16),
- un vernis de base (18) appliqué sur la première surface (14),
- un vernis de dessus (20) appliqué sur le vernis de base (18), et
- un film plastique (30) appliqué sur le vernis de dessus (20), ou comprenant :
un corps en plastique (12) ayant une première surface (14) et une seconde surface (16),
- un vernis de base (10),
- un vernis de dessus (20), et
- un film plastique appliqué,
* sur la première surface (14) entre le corps en plastique (12) et le vernis de base (18), le vernis de dessus (20) étant appliqué sur le vernis de base (10), ou
* entre le vernis de base (18) et le vernis de dessus (20), le vernis de base (18) étant appliqué sur la première surface (14).

2. Composant de revêtement externe (10) selon la revendication 1, **caractérisé en ce que**
le film plastique (30) est appliqué sur la seconde surface (16) au moyen d'une couche adhésive (32) entre la seconde surface (16) et le film en plastique (30).

3. Composant de revêtement externe (10) selon l'une des revendications 1 ou 2,
**caractérisé en ce que**
le vernis de dessus (20) est réalisé comme vernis clair (22).

4. Composant de revêtement externe (10) selon l'une quelconque des revendications précédentes,
**caractérisé en ce que**
la section de pénétration (28) comprend en outre une couche de fond (34) appliquée sur la première surface (14).

5. Composant de revêtement externe (10) selon l'une quelconque des revendications précédentes,
**caractérisé en ce que**
au moins un autre vernis (36) est prévu entre le vernis de base (18) et le vernis de dessus (20).

6. Composant de revêtement externe (10) selon l'une quelconque des revendications précédentes,
**caractérisé en ce que**
le composant de revêtement (10) a la même construction que la section de pénétration (28) sauf que,
- le film en plastique (30), ou
- le film en plastique (30) et la couche adhésive (32) sont seulement prévus dans la section de pénétration (28).

7. Véhicule (11) ayant :
- une source (24) d'ondes électromagnétiques (λ) dans une plage comprise entre 50 et 200 GHz,
- un composant de revêtement externe (10) selon l'une quelconque des revendications précédentes,
- la source (24) étant disposée de façon que les ondes électromagnétiques (λ) générées par la source (24) rencontrent la seconde surface (16) de la section de pénétration (28).

8. Véhicule (11) selon la revendication 7,
**caractérisé en ce que**
la source (24) émet des ondes électromagnétiques (λ) selon une direction principale (DM), et
- le vecteur normal (VN) de la seconde surface (16) fait un angle (α) par rapport à la direction principale (DM).

9. Procédé de fabrication d'un composant de revêtement externe (10) selon l'une quelconque des revendications 1 à 6,
comprenant les étapes consistant à :
- fournir le corps en plastique (12),
- appliquer le vernis de base (18),
* sur la première surface (14) du corps en plastique (12),
- appliquer au moins le vernis de dessus (20) sur le vernis de base (18),
* mesurer une première épaisseur (T1) du composant de revêtement (10) à l'intérieur de la section de pénétration (28), ou
* estimer la première épaisseur (T1) du composant de revêtement (10) dans la section de pénétration (28) en se fondant sur des données (CAO),
- déterminer une seconde épaisseur (T2) du film en plastique (30) en considérant l'amortissement des ondes électromagnétiques (λ) dans la plage comprise entre 50 et 200 GHz, et
- dans le cas où la seconde épaisseur calculée (T2) est supérieure à zéro, appliquer le film en plastique (30) ayant la seconde épaisseur (T2),
* sur la première surface (14) entre le corps en plastique (12) et le vernis de base (18), ou
* entre le vernis de base (18) et le vernis de dessus (20), ou
* sur le vernis de dessus (20) dans la section de pénétration (28).

10. Procédé selon la revendication 9,
selon lequel
on réalise séquentiellement un ensemble de composants de revêtements externes (10) et l'étape de mesure de la première épaisseur (T1) est effectuée :
- sur chaque composant de revêtement (10), ou
- sur un nombre représentatif de composants de revêtement (10), ou
- sur une pièce simple avant le début de la production.
